# EUROPÄISCHE PATENTANMELDUNG

(11) **EP 2 801 505 A1**
(43) Veröffentlichungstag der Anmeldung: **12.11.2014**
(21) Anmeldenummer: 14165890.6
(22) Anmeldetag: 24.04.2014
(51) Int. Cl.: B62D 1/10

(54) **Mechanismus zur Bewegung eines Fahrzeuglenkrades**

(30) Priorität: 10.05.2013 DE 202013004387 U
(71) Anmelder: Nosper, Tim, 88212 Ravensburg (DE); Schuler, Karl-Heinz, 88255 Baienfurt (DE)
(72) Erfinder: Nosper, Tim, 88212 Ravensburg (DE); Schuler, Karl-Heinz, 88255 Baienfurt (DE)
(74) Vertreter: Daub, Thomas

(57) **Zusammenfassung**

Die Erfindung geht aus von einem Mechanismus für ein Lenkrad (20) eines Reisemobils, mit einer Kinematik (22), die drehbar gelagerte Lenker (5, 6, 8, 23, 27, 28) aufweist, die zum Wegklappen des Lenkrades (20) vorgesehen sind.

Es wird vorgeschlagen, dass zumindest einer der drehbar gelagerten Lenker (6, 23) zumindest ein Langloch (24, 25) aufweist, in welchem zumindest ein Stift (7, 26) von zumindest einem Gelenk (29, 30) weiterer Lenker (5, 8, 27, 28) der Kinematik (22) gleiten kann.

## Beschreibung

### Stand der Technik

Die Erfindung betrifft einen Mechanismus zur Bewegung des Lenkrades eines Kraftfahrzeuges. Ein möglicher Einsatzbereich sind dabei Reisemobile. Dort werden heute oft drehbare Fahrersitze angeboten, welche um etwa 180° gedreht dann beispielsweise Sitzgruppen im Wohnraum des Reisemobils erweitern. Die Drehung eines Fahrersitzes ist heute oft sehr unkomfortabel. Häufig muss die Lehne des Sitzes aufrechter gestellt werden, der Sitz per Längsverstellung in eine bestimmte Position gefahren werden und im Extremfall sogar die Armauflage verstellt werden, so dass keine Hindernisse mehr das Drehen des Fahrersitzes beeinträchtigen. Dieser aufwendige Vorgang führt häufig dazu, dass Fahrersitze nicht zur Erweiterung des Wohnraums genutzt werden. Die Erfindung zielt darauf, das Lenkrad eines Fahrzeugs im Fahrzeugstillstand vom Fahrer weg nach vorne wegklappen zu können. Somit erschwert dieses Lenkrad nicht mehr die Drehung des Fahrersitzes. Ein weiterer Vorteil des weggeklappten Lenkrades ist, dass der Sitz nach der Drehung zusätzlich in eine bequeme Liegeposition nach hinten geneigt werden kann.

Ein weiterer möglicher Anwendungsbereich für den Mechanismus sind die Fahrerkabinen von Lastkraftwagen. Auch dort ergibt sich mit den oft hinter den Sitzen angeordneten Betten ein Lebensbereich, welcher deutlich mehr Komfort bietet, beispielsweise für den Zugang zum Bett oder zum Ablegen von Kleidung, wenn der Fahrersitz gedreht werden kann. Die Vorteile von Reisemobilen gelten hier also analog.

Auch bei gewöhnlichen Personenkraftwägen kann ein solcher Mechanismus Vorteile bieten, beispielsweise bei Pausen.

Zentraler Gedanke der vorliegenden Erfindung ist es, diese Bewegung des Lenkrades über eine geeignete Kinematik bestehend aus einem oder mehreren, jeweils drehbar gelagerten Lenkern zu ermöglichen. Bei einer vorteilhaften Ausführung kommen dabei ein oder mehrere Langlöcher in drehbar gelagerten Lenkern oder in feststehenden Elementen zum Einsatz, in welchen ein oder mehrere Stifte an Gelenken weiterer Lenker gleiten können.

Die Patentschrift DE 295 21 414 U 1 betrifft ein lageveränderliches Lenkrad, wobei hier nur eine Verstellung für eine verbesserte Fahrerergonomie angestrebt wird. Die Patentschrift EP 1 195 313 B1 beschreibt eine schwenkbare Lenkeinrichtung, wobei in diesem Patent auch lediglich eine ergonomische Verstellung adressiert wird. Auf dem Markt verfügbar sind Lösungen, bei denen sich das Lenkrad mit einem Handgriff entriegeln und vollständig entnehmen lässt. Diese Möglichkeit ist aber sehr unkomfortabel und das Lenkrad muss irgendwo im Fahrzeug gelagert werden. Zudem sind Lenkräder mit Bedienelementen und Airbag bei dieser Lösung nicht möglich. Zusammenfassend lässt sich feststellen, dass keine Schutzrechte und bestehenden Lösungen der beschriebenen Erfindung entgegenstehen.

Bei einer vorteilhaften Realisierungsmöglichkeit der vorliegenden Erfindung wird ein Mechanismus an der Lenksäule eines Fahrzeugs befestigt. An einer Grundplatte sind Lager für drehbar gelagerte Lenker angebracht. Über eine Kombination solcher Lenker wird eine Zwangskinematik erreicht, welche es erlaubt das Lenkrad von einer Ausgangsstellung nach vorne oben zu bewegen, so dass das Lenkrad platzsparend vor und über der Armaturentafel seine Endstellung einnehmen kann. Bei der Kombination der Lenker können vorteilhafte Bewegungsabläufe insbesondere dann erreicht werden, wenn dabei ein oder mehrere Langlöcher in drehbar gelagerten Lenkern oder in feststehenden Elementen zum Einsatz kommen, in welchen ein oder mehrere Stifte an Gelenken weiterer Lenker gleiten können.

Im Fahrbetrieb wird bei der vorliegenden Erfindung das Lenkrad in seiner Ausgangsstellung verriegelt. Die Erfindung enthält mehrere grundsätzliche Möglichkeiten der Verriegelung, die jeweils eine Fehlbedienung bzw. eine ungewollte Bedienung ausschließen. Entweder kann die Verriegelung des Lenkrades in Ausgangsstellung so ausgeführt werden, dass nur mittels der Bewegung zweier unabhängiger Sperrhaken diese Verriegelung gelöst werden kann oder so, dass nur mittels einer Drehbewegung an einem Handrad, einer Kurbel oder einem Handhebel diese Verriegelung gelöst werden kann oder so, dass nur mittels Ziehen an zwei oder mehreren federbelasteten Stiften diese Verriegelung gelöst werden kann.

Eine weitere Lösung für die Verriegelung ergibt sich bei einer elektrischen Variante. Dabei kann diese Verriegelung über elektrischen Strom an einem geeigneten Element, beispielsweise einem Elektromotor mit Spindel oder einem elektromagnetischen Aktuator, gelöst werden.

Bei der Verriegelung ergibt sich eine besonders vorteilhafte Lösung, wenn die Verriegelung bei der Bewegung des Lenkrades in der Ausgangs- oder Endlage automatisch verrastet, beispielsweise durch federbelastete Haken, die durch eine spezielle Geometrie bei der Bewegung zunächst aus ihrer Ausgangsstellung bewegt werden.

Ein zentraler Nachteil der beim Stand der Technik beschriebenen Lösung mit dem komplett abnehmbaren Lenkrad ergibt sich daraus, dass bei dieser Lösung Bedienknöpfe oder ein Airbag im Lenkrad nicht realisiert werden können. Teil der vorliegenden Erfindung ist auch eine Verbesserung dieser unzufrieden stellenden Situation. Bei der vorliegenden Erfindung kann mittels einer geeigneten Kabelschleppe oder eines schleifenden Stromübertragungselements elektrischer Strom zum Lenkrad transportiert werden, entweder zu Bedien- und Anzeigeelementen im oder an dem Lenkrad oder zur Elektronik eines Airbagsystems, beispielsweise zum Übertragen von Diagnoseinformationen oder eines Auslösebefehls.

Eine besonders vorteilhafte Kraftübertragung vom Lenkrad auf die Lenksäule ist ebenfalls Gegenstand der vorliegenden Erfindung. Dies kann dadurch erreicht werden, dass sich an demjenigen Teil des Mechanismus, welcher direkt am Lenkrad befestigt ist, ein oder mehrere Elemente befinden, welche bei der Bewegung in die Ausgangsstellung in ein oder mehrere Elemente an anderen Teilen des Mechanismus greifen, welche in umgekehrter Weise den ersten Elementen geometrisch genau oder annähernd entsprechen und somit eine Kraft- oder Momentübertragung durch Formschluss ermöglichen.

Eine zentrale Herausforderung bei der vorliegenden Aufgabenstellung ist die Vermeidung von Spiel zwischen Lenkrad und Lenksäule. Schon bei nur geringem Spiel erschwert sich die Kontrolle des Fahrzeugs deutlich und die Rückmeldung von der Straße kann nur noch schwer gedeutet werden. Die vorliegende Erfindung umfasst daher auch eine Nachstelleinrichtung, die beispielsweise mittels mehrerer Rastmöglichkeiten funktioniert und dazu geeignet ist, ein evtl. vorhandenes Spiel in der Verriegelung des Lenkrades zu eliminieren oder zu verringern.

Ebenfalls Gegenstand der Erfindung ist die Idee, eine oder mehrere translatorisch oder rotatorisch wirkende Federn dazu zu verwenden, ein evtl. vorhandenes Spiel in der Verriegelung des Lenkrades zu eliminieren oder zu verringern.

Schließlich ist es auch Gegenstand der Erfindung, dass das Moment bzw. die Kräfte bei den ersten Lenkbewegungen dazu genutzt werden, mittels geeigneter Keileffekte ein evtl. vorhandenes Spiel in der Verriegelung des Lenkrades zu eliminieren oder zu verringern.

Für gehobenen Bedienkomfort ist es wünschenswert, dass nur auf Knopfdruck das Lenkrad entriegelt wird und vollautomatisch eine Bewegung in Richtung Armaturenbrett vollführt. Zur Umsetzung dieser Verstellung ist es notwendig, dass die Betätigung des Mechanismus direkt oder indirekt über elektrische Motoren erfolgt. Auch diese Realisierung ist Teil der vorliegenden Erfindung.

Normalweise ist es für den Fahrer eines Fahrzeugs beim Abstellen des Fahrzeugs insbesondere bei Vorliegen einer Lenkhilfe (Servo-Lenkung) kein Problem, das Lenkrad in Geradeausstellung zu bringen, bevor das Lenkrad weggeklappt werden soll. Trotzdem ergibt sich ein weiterer Komfortgewinn, wenn eben dieser Vorgang unnötig ist und das Lenkrad aus jeder Lage vom Fahrersitz weg geschwenkt werden kann.

Daher ist es auch Gegenstand dieser Erfindung, den Mechanismus so zu gestalten bzw. zu erweitern, dass durch geeignete Trennelemente die Schwenkbewegung unabhängig von der Ausgangsstellung des Lenkrades erfolgt.

Aus dem Gesichtspunkt der Fahrzeugsicherheit ist es ausreichend, dass eine Entriegelung des Lenkrades entweder eine koordinierte Bewegung von zwei Händen oder eine länger währende Drehbewegung erfordert. Trotzdem kann es unter Sicherheitsaspekten sinnvoll sein, Informationen über den Status der Verriegelung ans Fahrzeug weiterzugeben, um beispielsweise bei offener Verriegelung ein Starten des Motors elektronisch verhindern zu können. Daher ist es auch Gegenstand der Erfindung, dass über geeignete Elemente bei geschlossener Verriegelung Signale kabelgebunden und über Funkwellen zu geeigneten Steuereinrichtungen des Fahrzeugs gesendet werden.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert.

Es zeigen:
Figur 1 eine Ansicht des Mechanismus von der Seite, wobei sich hier das Lenkrad in Ausgangsstellung befindet.
Figur 2 eine Ansicht des Mechanismus von der Seite, wobei sich hier das Lenkrad in der Mitte zwischen Ausgangsstellung und Endstellung (weggeklappt) befindet.
Figur 3 eine Ansicht des Mechanismus von der Seite, wobei sich hier das Lenkrad in Endstellung (weggeklappt) befindet.
Figur 4 für eine bessere Vorstellung eine Ansicht des Mechanismus von der Seite, wobei sich hier das Lenkrad in Ausgangsstellung dargestellt ist.

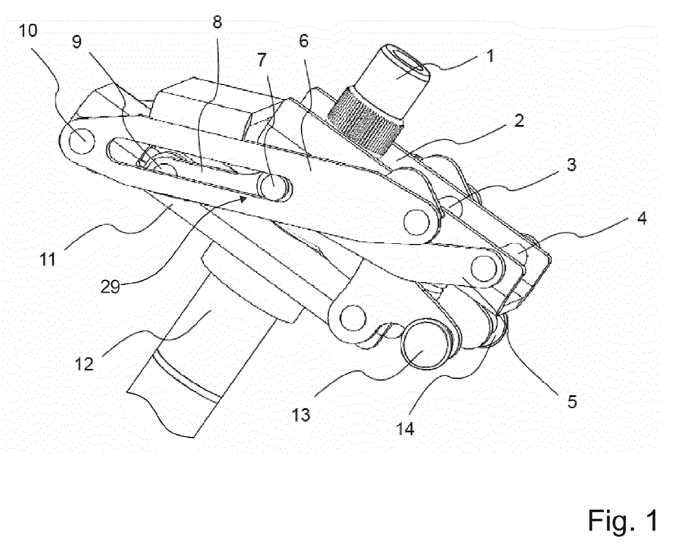

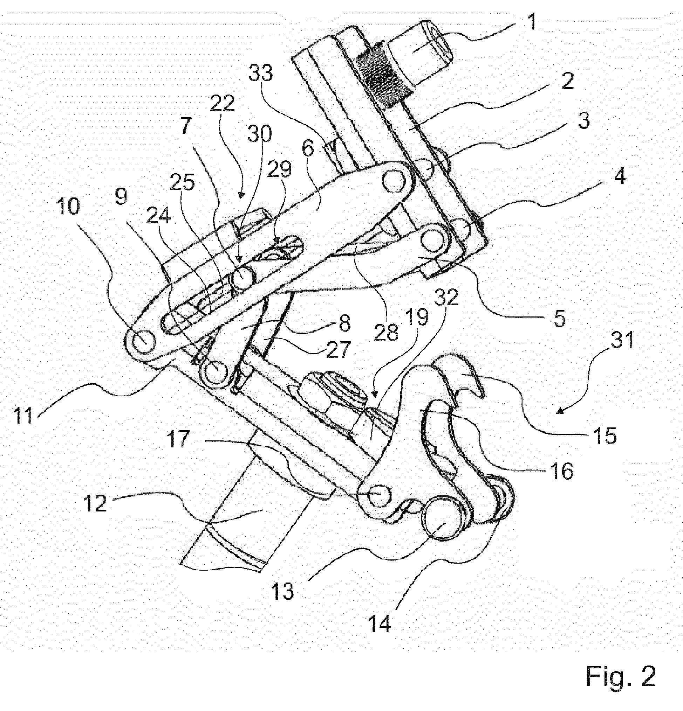

Figuren 1 und 2 zeigen einen Mechanismus für ein Lenkrad 20 eines Reisemobils. Der Mechanismus weist eine Kinematik 22 auf. Die Kinematik 22 umfasst drehbar gelagerte Lenker 5, 6, 8, 23, 27, 28. Die Lenker 5, 6, 8, 23, 27, 28 sind zum Wegklappen des Lenkrades 20 vorgesehen. Zwei der drehbar gelagerten Lenker 6, 23 weisen ein Langloch 24, 25 auf, in welchem Stifte 7, 26 von Gelenken 29, 30 weiterer Lenker 5, 8, 27, 28 der Kinematik 22 gleiten können.

Die Lenker 6, 23 mit den Langlöchern 24, 25 sind an einer unteren, starr mit einer Lenksäule 12 angeordneten Adaptionsplatte 11 schwenkbar gelagert. Auch zwei weitere Lenker 8, 27 der Kinematik 22 sind an der unteren, starr mit der Lenksäule 12 angeordneten Adaptionsplatte 11 schwenkbar gelagert. Die Lenker 6, 8, 23 und 27 sind jeweils auf Stiften 9 und 10 drehbar gelagert, für welche Bohrungen in der unteren Adaptionsplatte 11 vorhanden sind. Genauer gesagt sind die Lenker 6, 23 mit den Langlöchern 24, 25 an dem äußeren Stift 10 gelagert, der an einem äußeren Ende der Adaptionsplatte 11 angeordnet ist. Die weiteren Lenker 8, 27 sind an dem Stift 9 drehbar gelagert, der zwischen dem äußeren Stift 10 und der Lenksäule 12 des Fahrzeugs angeordnet ist. Der äußere Stift 9 verläuft parallel zu einer Ebene, die sich senkrecht zur Lenksäule 12 erstreckt.

Die Lenker 6, 23 mit den Langlöchern 24, 25 sind an einer oberen, starr mit dem Lenkrad 20 verbindbaren Adaptionsplatte 2 schwenkbar gelagert. Die weiteren Lenker 5, 8, 27, 28 sind unterteilt in zwei untere Lenker 8, 27 und zwei obere Lenker 5, 28. Die oberen Lenker 5, 28 sind dem Lenkrad näher zugewandt als die unteren Lenker 8, 27. Die untere Adaptionsplatte 11 und die obere Adaptionsplatte 2 verlaufen in einer Ausgangsstellung parallel zueinander.

Die unteren Lenker 8, 27 der weiteren Lenker 5, 8, 27, 28 der Kinematik 22 sind mit den oberen Lenkern 5, 28 der weiteren Lenker 5, 8, 27, 28 über die zwei Gelenke 29, 30 schwenkbar verbunden. Wie bereits erwähnt, weisen die Gelenke 29, 30 jeweils einen Stift 7, 26 auf. Ein Stift 7 der Stifte 7, 26 ist im Langloch 24 des einen Lenkers 6 verschiebbar gelagert. Der andere Stift 26 der Stifte 7, 26 ist im Langloch 25 des einen weiteren Lenkers 23 verschiebbar gelagert. Die oberen Lenker 5, 28 sind an der oberen, starr mit dem Lenkrad 20 verbindbaren Adaptionsplatte 2 schwenkbar gelagert.

Über diese Anordnung ist die Kinematik 22 dazu vorgesehen, das Lenkrad 20 entgegen einer Schwenkrichtung der an der oberen Adaptionsplatte 2 gelagerten Lenker 5, 6, 23, 28 zu schwenken. Es ist in diesem Zusammenhang auch denkbar, dass diese Schwenkbewegung über eine andere, dem Fachmann als sinnvoll erscheinende Lenkeranordnung ausführbar ist. Ferner ist es denkbar, dass die Schwenkbewegung auch bei eingeschlagenen Fahrzeugrädern immer nach vorne von einem Fahrersitz weg erfolgt. Dies kann beispielsweise durch zumindest ein geeignetes Trennelement erfolgen, das dazu vorgesehen ist, eine Schwenkbewegung unabhängig von der Ausgangsstellung des Lenkrades 20 ausführbar zu machen.

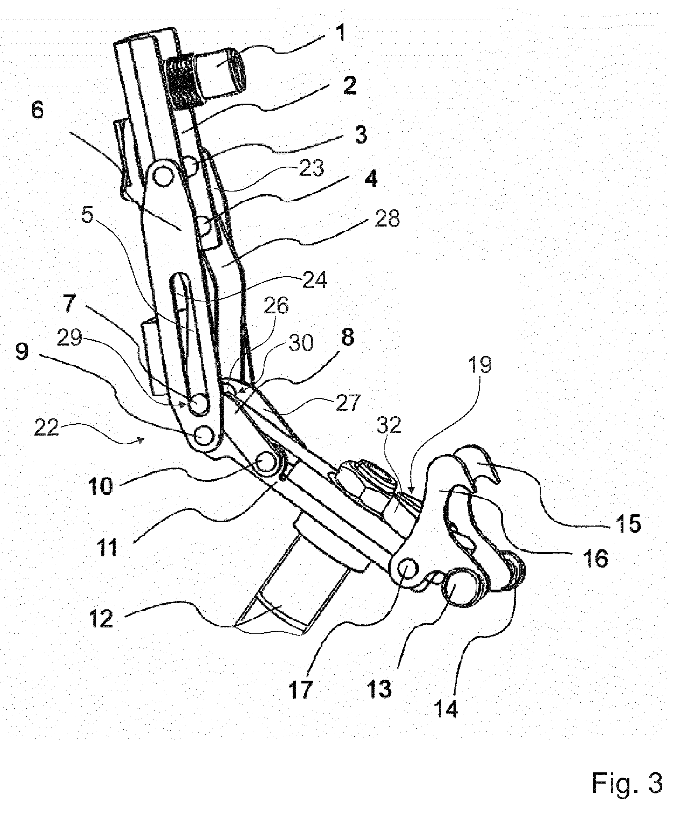

Wie in der Figur 3 dargestellt, weist der Mechanismus eine Eintaucheinheit 19 auf. Die Eintaucheinheit 19 ist dazu vorgesehen, in der Ausgangsstellung ein Moment über Formschluss von der oberen Adaptionsplatte 2 auf die untere Adaptionsplatte 11 zu übertragen. Die Eintaucheinheit 19 weist hierfür einen unteren Grundkörper 32 auf, der an der unteren Adaptionsplatte 11 angeordnet ist. Der untere Grundkörper 32 ist fest mit der unteren Adaptionsplatte 11 verbunden.

Die Eintaucheinheit 19 weist ein an der oberen Adaptionsplatte 2 angeordnetes Eintauchelement 33 auf. Der untere Grundkörper 32 weist eine Grundkörperausnehmung zur formschlüssigen Aufnahme des Eintauchelements 33 auf. In der Ausgangsstellung liegt das Eintauchelement 33 formkomplementär innerhalb der Grundkörperausnehmung am unteren Grundkörper 32 an. Somit erlaubt die Eintaucheinheit 19 in der Ausgangsstellung eine Momentübertragung über Formschluss von der oberen Adaptionsplatte 2 auf die untere Adaptionsplatte 11. Um ein Spiel in einer Verriegelung 31 des Lenkrades 20 zu eliminieren oder zu verringern ist es denkbar eine Nachstelleinrichtung vorzusehen. Ferner ist es denkbar, dass das Moment bzw. die Kräfte bei den ersten Lenkbewegungen dazu genutzt werden, mittels geeigneter Keileffekte ein evtl. vorhandenes Spiel in der Verriegelung 31 des Lenkrades 20 zu eliminieren oder zu verringern.

Im Folgenden werden die Figuren 1 bis 3 näher beschrieben. Zentrales Element ist eine Welle 1 zur Befestigung des Lenkrades 20. Am Lenkrad 20 befestigt ist die obere Adaptionsplatte 2. In dieser Adaptionsplatte 2 sind Bohrungen für Stifte 3, 4 vorhanden. Auf diesen Stiften 3, 4 sind die Lenker 5, 6, 23, 28 drehbar gelagert (Figur 2). Dabei ist der Lenker 5 an einem anderen Ende auf dem Stift 7 gelagert, welcher sich innerhalb des Langlochs 24 im Lenker 6 verschieben kann. Der Lenker 28 ist an einem anderen Ende ebenfalls auf dem Stift 7 gelagert, welcher sich innerhalb des Langlochs 25 im Lenker 23 verschieben kann. Ebenfalls auf diesem Stift 7 ist jeweils der weitere Lenker 8, 27 drehbar gelagert (in der Ausgangsstellung größtenteils verdeckt).

Die untere Adaptionsplatte 11 ist drehfest mit der Lenksäule 12 des Fahrzeugs verbunden. Die Kinematik 22 umfasst die Verriegelung 31. Die Verriegelung 31 ist an der unteren Adaptionsplatte 11 befestigt. Die Verriegelung 31 ist dazu vorgesehen, eine Bewegung in einer Ausgangsstellung und/oder in einer Endlage des Lenkrades 20 zu sperren. Die Kinematik 22 umfasst in diesem Ausführungsbeispiel zwei unabhängige Verschlusshaken 15, 16. Die Verschlusshaken 15, 16 greifen bei einer Sperrung der unteren Adaptionsplatte 11 mit der oberen Adaptionsplatte 2 um den Stift 4. Mittels einer Bewegung der Verschlusshaken 15, 16 ist die Verriegelung 31 lösbar.

Die Verschlusshaken 15, 16 lassen sich über Entrastbolzen 13, 14 händisch bewegen. In der Figur 2 sind gut die Entrastbolzen 13 und 14 zu sehen. Die Verschlusshaken 15, 16 sind an einem Stift 17 schwenkbar an der unteren Adaptionsplatte 11 gelagert. Es ist in diesem Zusammenhang auch denkbar, dass die Kinematik 22 zumindest ein Handrad und/oder eine Kurbel umfasst, die dazu vorgesehen ist, die Verriegelung 31 zu sperren. Weiterhin ist es denkbar, dass die Kinematik 22 zumindest einen federbelasteten Stift umfasst, der dazu vorgesehen ist, die Verriegelung 31 zu sperren. Dabei ist auch zumindest eine translatorisch und/oder rotatorisch wirkende Feder denkbar, die dazu vorgesehen ist, ein evtl. vorhandenes Spiel in der Verriegelung 31 des Lenkrades 20 zu eliminieren oder zu verringern.

Ferner ist es in diesem Zusammenhang denkbar, dass die Kinematik 22 zumindest ein Element umfasst, das dazu vorgesehen ist, die Verriegelung 31 über einen elektrischen Strom zu lösen. Hierbei ist es insbesondere denkbar, dass die Verriegelung 31 mittels eines Elektromotors mit Spindel und/oder eines elektromagnetischen Aktuators gelöst werden kann. Weiterhin ist es in diesem Zusammenhang denkbar, dass die Verriegelung 31 dazu vorgesehen ist, bei einer Bewegung des Lenkrades 20 in eine Ausgangs- oder Endstellung automatisch zu verrasten, beispielsweise durch federbelastete Haken, die durch eine spezielle Geometrie bei der Bewegung zunächst aus ihrer Ausgangsstellung bewegt werden.

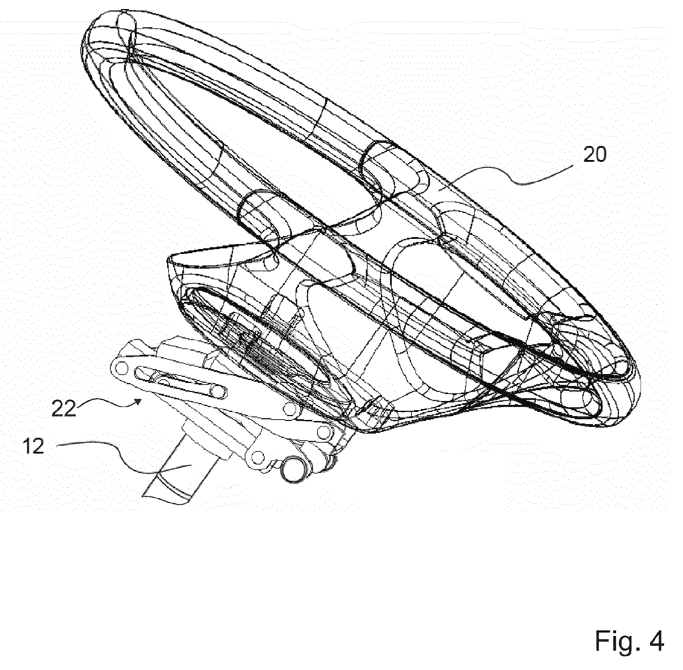

Die Figur 4 zeigt den Mechanismus mit dem Lenkrad 20 in der Ausgangsstellung. Zum Lenkrad 20 fließt mittels einer geeigneten, nicht näher gezeigten Kabelschleppe und/oder eines schleifenden Stromübertragungselements elektrischer Strom, entweder zu Bedien- und Anzeigeelementen im oder an dem Lenkrad 20 oder zur Elektronik eines Airbagsystems, beispielsweise zum Übertragen von Diagnoseinformationen oder eines Auslösebefehls. Es ist in diesem Zusammenhang auch denkbar, dass eine Betätigung des Mechanismus direkt oder indirekt über elektrische Motoren erfolgt. In diesem Zusammenhang ist es auch denkbar, dass über geeignete Elemente bei geschlossener Verriegelung Signale kabelgebunden und über Funkwellen zu geeigneten Steuereinrichtungen des Fahrzeugs gesendet werden. Hierdurch kann beispielsweise ein Starten des Fahrzeugs unterbunden werden, falls sich das Lenkrad 20 nicht in der Ausgangsstellung befindet.

Die Erfindung ist nicht auf das vorstehend gezeigte Ausführungsbeispiel beschränkt. Vielmehr ist eine Vielzahl von Varianten und Abwandlungen denkbar, die ebenfalls vom Erfindungsgedanken Gebrauch machen und damit in den Schutzbereich fallen.

### Bezugszeichenliste

- (1): Welle
- (2): Adaptionsplatte
- (3): Stift
- (4): Stift
- (5): Lenker
- (6): Lenker
- (7): Stift
- (8): Lenker
- (9): Stift
- (10): Stift
- (11): Adaptionsplatte
- (12): Lenksäule
- (13): Entrastbolzen
- (14): Entrastbolzen
- (15): Verschlusshaken
- (16): Verschlusshaken
- (17): Stift
- (19): Eintaucheinheit
- (20): Lenkrad
- (22): Kinematik
- (23): Lenker
- (24): Langloch
- (25): Langloch
- (26): Stift
- (27): Lenker
- (28): Lenker
- (29): Gelenk
- (30): Gelenk
- (31): Verriegelung
- (32): Grundkörper
- (33): Eintauchelement

## Patentansprüche

1. Mechanismus für ein Lenkrad (20) eines Reisemobils, mit einer Kinematik (22), die drehbar gelagerte Lenker (5, 6, 8, 23, 27, 28) aufweist, die zum Wegklappen des Lenkrades (20) vorgesehen sind,
**dadurch gekennzeichnet, dass**
zumindest einer der drehbar gelagerten Lenker (6, 23) zumindest ein Langloch (24, 25) aufweist, in welchem zumindest ein Stift (7, 26) von zumindest einem Gelenk (29, 30) weiterer Lenker (5, 8, 27, 28) der Kinematik (22) gleiten kann.

2. Mechanismus nach Anspruch 1,
**dadurch gekennzeichnet, dass**
die Kinematik (22) eine Verriegelung (31) umfasst, die dazu vorgesehen ist eine Bewegung in einer Ausgangslage und/oder in einer Endlage des Lenkrades (20) zu sperren.

3. Mechanismus nach Anspruch 2,
**dadurch gekennzeichnet, dass**
die Kinematik (22) zumindest zwei unabhängige Verschlusshaken (15, 16) umfasst, die dazu vorgesehen sind, die Verriegelung (31) mittels einer Bewegung zu lösen.

4. Mechanismus zumindest nach Anspruch 2, **dadurch gekennzeichnet, dass** die Verriegelung (31) dazu vorgesehen ist, bei einer Bewegung des Lenkrades (20) in eine Ausgangs- oder Endlage automatisch zu verrasten.

5. Mechanismus nach einem der vorhergehenden Ansprüche,
**dadurch gekennzeichnet, dass**
die Lenker (6, 23) mit dem zumindest einen Langloch (24, 25) an einer unteren, starr mit einer Lenksäule (12) angeordneten Adaptionsplatte (11), schwenkbar gelagert sind.

6. Mechanismus nach Anspruch 5,
**dadurch gekennzeichnet, dass**
die Lenker (6, 23) mit dem zumindest einen Langloch (24, 25) an einer oberen, starr mit dem Lenkrad (20) verbindbaren Adaptionsplatte (2), schwenkbar gelagert sind.

7. Mechanismus nach einem der vorhergehenden Ansprüche,
**dadurch gekennzeichnet, dass**
zumindest einer der weiteren Lenker (8, 27) der Kinematik (22) an einer unteren, starr mit einer Lenksäule (12) angeordneten Adaptionsplatte (11), schwenkbar gelagert ist.

8. Mechanismus nach einem der vorhergehenden Ansprüche,
**dadurch gekennzeichnet, dass**
zumindest ein unterer Lenker (8, 27) der weiteren Lenker (5, 8, 27, 28) der Kinematik (22) mit zumindest einem oberen Lenker (5, 28) der weiteren Lenker (5, 8, 27, 28) über das zumindest eine Gelenk (29, 30) schwenkbar verbunden ist.

9. Mechanismus nach Anspruch 8,
**dadurch gekennzeichnet, dass**
der zumindest eine obere Lenker (5, 28) an einer oberen, starr mit dem Lenkrad (20) verbindbaren Adaptionsplatte (2), schwenkbar gelagert ist.

10. Mechanismus nach Anspruch 9,
**dadurch gekennzeichnet, dass**
die Kinematik (22) dazu vorgesehen ist, das Lenkrad (20) entgegen einer Schwenkrichtung der an der oberen Adaptionsplatte (2) gelagerten Lenker (5, 6, 23, 28) zu schwenken.

11. Mechanismus zumindest nach den Ansprüchen 6 und 7,
**dadurch gekennzeichnet, dass**
die untere Adaptionsplatte (11) und die obere Adaptionsplatte (2) in einer Ausgangsstellung zumindest im Wesentlichen parallel zueinander verlaufen.

12. Mechanismus zumindest nach einem der vorhergehenden Ansprüche,
**gekennzeichnet durch**
eine Eintaucheinheit (19), die dazu vorgesehen ist, in einer Ausgangsstellung ein Moment über Formschluss von der oberen Adaptionsplatte (2) auf die untere Adaptionsplatte (11) zu übertragen.

13. Reisemobil mit einem Mechanismus nach einem der vorhergehenden Ansprüche.
